(19) Europäisches Patentamt
European Patent Office
Office européen des brevets

(11) Veröffentlichungsnummer: **0 343 419 B1**

## (12) EUROPÄISCHE PATENTSCHRIFT

(45) Veröffentlichungstag der Patentschrift: **02.12.92**

(51) Int. Cl.5: **B60J 7/08**, G02F 1/13

(21) Anmeldenummer: **89108216.6**

(22) Anmeldetag: **06.05.89**

(54) **Lichtdurchlässige Scheibe, insbesondere für das Dach eines Kraftfahrzeuges.**

(30) Priorität: **27.05.88 DE 3817946**

(43) Veröffentlichungstag der Anmeldung:
**29.11.89 Patentblatt 89/48**

(45) Bekanntmachung des Hinweises auf die
Patenterteilung:
**02.12.92 Patentblatt 92/49**

(84) Benannte Vertragsstaaten:
**DE ES FR GB IT SE**

(56) Entgegenhaltungen:
EP-A- 0 204 562
EP-A- 0 238 164
US-A- 4 475 031

PATENT ABSTRACTS OF JAPAN, Band. 11,
Nr. 334 (P-631), 31. Oktober 1987; & JP-A-62
115 416 (SHARP CORP.) 27-05-1987

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Klein, Joachim, Dr.**
**Höhenkirchnerstrasse 15a**
**W-8011 Hohenbrunn(DE)**
Erfinder: **Schüch, Siegmund**
**Kagerstrasse 4a**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine lichtdurchlässige Scheibe, insbesondere für das Dach eines Kraftfahrzeuges, mit einer lichtdurchlässigen Halbleiterschicht, an deren der Sonneneinstrahlung abgewandten Seite eine Reflektionsschicht angeordnet ist, mit der zumindest ein Teil der durch die Halbleiterschicht hindurchgehenden Sonnenstrahlung reflektierbar ist.

Eine derartige Scheibe ist aus der EP-A-0204562 bekannt. Durch die Reflektionsschicht wird dabei der Wirkungsgrad der Halbleiterschicht erhöht. Die Reflektionsschicht wird bei der bekannten Scheibe durch eine an der von der Sonneneinstrahlung abgewandten Seite der Halbleiterschicht angeordnete Elektrodenschicht gebildet, welche aus einem IR-Strahlung selektiv reflektierendem Material, z. B. Indium-Zinn-Oxid, besteht.

Aus der EP-A-0238164 ist es bekannt, mit einer Flüssigkristallschicht in einer Scheibe zum Schutz vor Sonneneinstrahlung oder zum Schutz der Privatsphäre sichtbares Licht teilweise oder vollständig zu reflektieren.

Aufgabe der Erfindung ist es, die eingangs genannte Scheibe hinsichtlich des Wirkungsgrades und des Komforts zu verbessern.

Dies wird erfindungsgemäß durch die im Anspruch 1 gekennzeichnete Scheibe erreicht. Vorteilhafte Ausgestaltungen der Erfindung sind in den Unteransprüchen angegeben.

Erfindungsgemäß kann also mittels einer angelegten Spannung die Transparenz der Flüssigkristallschicht beliebig gesteuert werden. D. h. im angesteuerten Zustand ist die Flüssigkristallschicht transparent, da die Flüssigkristalle sich mit ihrer Längsachse senkrecht zur Scheibenebene, also in Sonneneinstrahlungsrichtung ausrichten, während im nicht angesteuerten Zustand die Flüssigkristallschicht milchig ist, also die Sonnenstrahlung zur Halbleiter- oder Solarzellenschicht ganz oder teilweise zurückreflektiert und damit den Wirkungsgrad der Solarzellenschicht erhöht.

Bei Verwendung der erfindungsgemäßen Scheibe im Dach eines Kraftfahrzeuges ist die an die Flüssigkristallschicht angelegte Spannung bei abgestelltem Fahrzeug abschaltbar.

Da dadurch die Transparenz der Flüssigkristallschicht beseitigt wird, vermindert sich einerseits die Erwärmung des Innenraumes des Kraftfahrzeuges, während andererseits das von der Halbleiterschicht zurückreflektierte Sonnenlicht die Leistung der Solarzellenschicht erhöht, so daß sie z. B. ein Gebläse des Fahrzeuges mit Strom versorgen kann, um die Temperatur im Personeninnenraum zu steuern und damit den Komfort zu verbessern.

Außerdem können durch die erfindungsgemäße Scheibe bei abgestelltem Fahrzeug Dauerverbraucher, wie Bordcomputer, bestimmte Komponenten elektronischer Anlagen, Uhren usw. zur Schonung der Batterie mit Strom versorgt werden. Diese Funktion der erfindungsgemäßen Scheibe kommt insbesondere im Winter zum Tragen.

Um die Temperatur des Innenraumes des Kraftfahrzeuges konstant zu halten, kann die an die Flüssigkristallschicht angelegte Spannung von der Intensität der Sonneneinstrahlung abhängig sein, d. h. bei schwacher Sonneneinstrahlung ist die Transparenz der Flüssigkristallschicht sehr groß, gleichzeitig der Solarzellenwirkungsgrad gering, weil in diesem Zustand nicht viel Energie zur Versorgung des Lüfters, der Klimaanlage usw. verbraucht wird. Steigt dagegen die Sonneneinstrahlung an, wird zur Komfortsteigerung im Innenraum einerseits die Transparenz der Scheibe verringert und zugleich mehr elektrische Energie durch die Solarzellenanordnung zur Verfügung gestellt, so daß Lüfter oder Klimaanlage besser arbeiten können.

Um die Transparenz im sichtbaren Bereich nicht oder nicht wesentlich zu beeinflussen, kann die Flüssigkristallschicht so ausgebildet sein, daß zwar ihre Transparenz im Bereich der IR-Strahlung, jedoch nicht beziehungsweise nur unwesentlich im sichtbaren Bereich durch die angelegte Spannung beeinflußt wird. Eine solche IR-Strahlung selektiv reflektierende Flüssigkristallschicht kann z. B. eine Flüssigkristall-Folie sein, in der Flüssigkristallkügelchen oder -tröpfchen in einer Kunststoffmatrix eingebettet sind, wobei der Durchmesser der Flüssigkristalltröpfchen entsprechend der Wellenlänge der IR-Strahlung eingestellt wird.

Weiterhin hat sich gezeigt, daß eine Gleichspannung zur Steuerung der Transparenz der Flüssigkristallschicht zu einer Elektrolyse und damit zum Abbau der Flüssigkristalle führt. Demgemäß wird nach einer bevorzugten Ausgestaltung der Erfindung eine Wechselspannung ohne Gleichspannungsanteile zum Ansteuern der Flüssigkristallschicht verwendet.

Um die Transparenz für das menschliche Auge aufrechtzuerhalten, muß die Wechselspannung allerdings eine Frequenz von mindestens 10 Hz, vorzugsweise 100 Hz, aufweisen.

Als Halbleitermaterial für die Solarzellenschicht wird nach einer bevorzugten Ausgestaltung der Erfindung amorphes Silizium verwendet.

Es ist im sichtbaren Licht relativ transparent und weist einen hohen Wirkungsgrad auf.

Vorteilhaft wird die amorphe Siliziumschicht auf der der Flüssigkristallschicht zugewandten Seite einer Dünnglasschicht, z. B. durch Sputtern aufgebracht.

Die Dünnglasschicht, die eine Dicke von z. B. 1 bis 2 mm aufweist, dient also zugleich als Träger für die Halbleiterschicht und als Außenschicht, d. h. zum mechanischen Schutz der Scheibe.

Vorzugsweise weist die erfindungsgemäße Scheibe an ihrer von der Sonneneinstrahlungsrichtung abgewandten Seite eine Formglasschicht auf. Dabei kann es sich um eine vorgespannte Glasschicht, also z. B. um eine ESG-Scheibe handeln.

Damit über die gesamte Flüssigkristallschicht eine gleichmäßige Feldstärke herrscht, also insbesondere elektrische Durchschläge zwischen den Elektroden der Flüssigkristallschicht ausgeschlossen sind, ist es von Bedeutung, daß die Schichtdicke der Flüssigkristallschicht nur innerhalb einer sehr geringen Toleranz von wenigen Hundertstel Millimetern schwankt.

Die Dünnglasschicht und die Formglasschicht, die die starren Außenschichten der erfindungsgemäßen Schichtanordnung bilden, sind jedoch mit derartig geringen Toleranzen nicht herstellbar. Demgemäß wird nach einer bevorzugten Ausgestaltung der Erfindung mindestens eine elastomere Kunststoffschicht zwischen Flüssigkristallschicht und Formglasschicht und/oder Dünnglasschicht vorgesehen. Durch ihr gummi-elastisches Verhalten gleicht diese Schicht Toleranzen zwischen der starren Dünnglas- und Formglasschicht aus, so daß die geforderte gleichmäßige Schichtdicke der Flüssigkristallschicht erhalten wird.

Als elastomerer Kunststoff werden vorzugsweise die bei der Herstellung von Verbund-Sicherheitsglas als Zwischenschichten bekannten Kunststofffolien aus Polyvinylbutyral (PVB) oder aus Ethylen-Vinylacetat-Copolymeren (EVA) verwendet.

Die beiderseits der Flüssigkristallschicht vorgesehenen Elektrodenschichten können z. B. aus Indium-Zinn-Oxid bestehen.

Beide Elektrodenschichten beiderseits der Flüssigkristallschicht können an Kunststofffolien angeordnet sein. Allerdings kann insbesondere bei kleinen Krümmungsradien der Scheibe, beispielsweise bei dem Solardach eines Kraftfahrzeuges, ein unkontrolliertes Reißen der auf der Kunststofffolie aufgebrachten Elektrodenschicht auftreten. Um die Wahrscheinlichkeit des Auftretens solcher Risse von vornherein zu vermindern, wird daher vorzugsweise nur eine auf einer Kunststofffolie aufgebrachte Elektrodenschicht verwendet, zumal Bereiche der Flüssigkristallschicht, die beiderseits beschädigte Elektrodenschichten aufweisen, kaum noch angesteuert werden können. Die andere Elektrodenschicht wird dann z. B. auf die auf der Dünnglasscheibe vorgesehene Halbleiterschicht aufgebracht.

Um das erwähnte Risiko der Beschädigung der Elektrodenschicht auf der Kunststofffolie zu vermeiden, ist es ferner möglich, schon von vornherein eine Schicht aus einem elektrisch leitfähigen, transparenten elastomeren Kunststoff zu verwenden, die zugleich als Elektrodenschicht dient.

Wenn die Schichtdicke der Flüssigkristallschicht über deren gesamte Fläche gleichmäßig ist, also deren Außenflächen planparallel zueinander verlaufen, wird bei angelegter Spannung eine homogene Feldstärke und damit eine gleichmäßige Transparenz über die gesamte Schicht hinweg erreicht.

Bei manchen Anwendungsfällen kann es jedoch erwünscht sein, daß bestimmte Bereiche der Scheibe weniger transparent sind als andere. So kann z. B. bei Verwendung der erfindungsgemäßen Scheibe in einem Autodach erwünscht sein, daß beispielsweise im Gegensatz zu den Hintersitzen, die Vordersitze der IR-Strahlung weniger ausgesetzt sind. In diesem Fall ist die Schichtdicke der Flüssigkristallschicht der erfindungsgemäßen Scheibe so auszubilden daß sie von vorne nach hinten abnimmt, d. h. die Feldstärke und damit die Transparenz für IR-Strahlung im hinteren Bereich größer als im vorderen Bereich der Scheibe ist.

Die Herstellung einer erfindungsgemäßen Verbundscheibe, bei der z. B. in Sonneneinstrahlungsrichtung nacheinander eine Dünnglasschicht, eine Halbleiterschicht, eine Elektrodenschicht, eine Flüssigkristallschicht, eine Elektrodenschicht, eine Kunststoffschicht und eine Formglasschicht vorgesehen sind, kann dadurch erfolgen, daß auf eine mit einer Halbleiterschicht versehene Dünnglasscheibe nacheinander eine Elektrodenschicht, eine Flüssigkristallschicht und eine mit einer Elektrodenschicht versehene elastomere Kunststoffschicht aufgeklebt und mit der Formglasschicht bei erhöhter Temperatur verpreßt werden. Die elastomere Kunststoffschicht dient also zugleich als Haftvermittler.

Mit der erfindungsgemäßen Scheibe kann selbstverständlich nicht nur Sonnenlicht, sondern auch anderes Licht, insbesondere die IR-Strahlung anderer Lichtquellen in elektrische Energie umgewandelt werden. Weiterhin ist die erfindungsgemäße Scheibe zwar insbesondere für den Einsatz in der Dachöffnung eines Kraftfahrzeuges bestimmt, jedoch ist ihre Verwendung darauf nicht beschränkt. So, kann sie beispielsweise auch als Gewächshausscheibe eingesetzt werden.

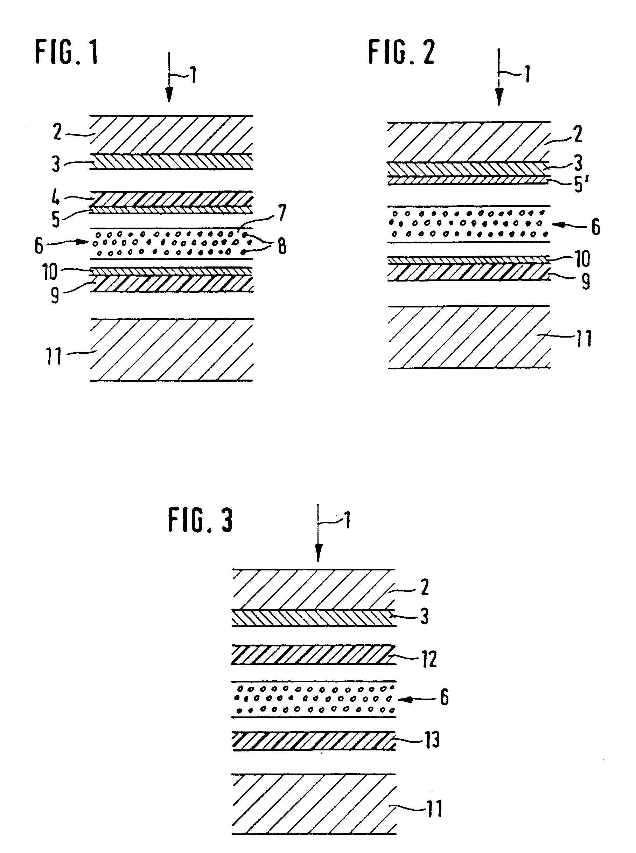

Nachstehend sind Ausführungsformen der erfindungsgemäßen Scheibe anhand der Zeichnung näher erläutert. Darin zeigen Fig. 1 bis 3 jeweils im Querschnitt schematisch eine andere Ausführungsform der erfindungsgemäßen Scheibe vor dem Zusammenpressen einzelner Schichten.

Gemäß Fig. 1 weist die Scheibe in Sonneneinstrahlungsrichtung gemäß dem Pfeil 1, d. h. von oben nach unten, nacheinander eine Dünnglasscheibe 2 mit einer Halbleiterschicht 3, z. B. aus amorphem Silizium, an der Unterseite, eine elastomere Kunststofffolie 4, z. B. aus PVB oder EVA mit einer Elektrodenschicht 5, z. B. aus Indium-Zinn-Oxid an der Unterseite, eine Flüssigkristallschicht 6 in Form einer Folie aus in einer Kunststoffmatrix 7 eingebetteten Flüssigkristallkügelchen oder -tröpfchen 8, eine Kunststofffolie 9, z. B. aus PVB oder EVA mit einer Elektrodenschicht 10 (z. B. Indium-Zinn-Oxid) an der Oberseite und eine Formglasschicht 11 auf.

Die Ausführungsform nach Fig. 2 unterscheidet sich von derjenigen nach Fig. 1 im wesentlichen dadurch, daß die Kunststoffschicht 4 mit der Elektrodenschicht 5 zwischen der Halbleiterschicht 3 und der Flüssigkristallschicht 6 weggelassen und durch eine an der Unterseite der Halbleiterschicht 3 aufgebrachte Elektrodenschicht 5′ ersetzt ist.

Die Ausführungsform nach Fig. 3 unterscheidet sich von derjenigen nach Fig. 1 im wesentlichen dadurch, daß die beiden Kunststoffschichten 4 und 9 mit ihren Elektroden schichten 5 und 10 durch eine Kunststofffolie 12 beziehungsweise 13 ersetzt sind, die aus einem elektrisch eigenleitendem Material besteht.

**Patentansprüche**

1. Lichtdurchlässige Scheibe, insbesondere für das Dach eines Kraftfahrzeuges mit einer lichtdurchlässigen Halbleiterschicht (3), an deren der Sonneneinstrahlung abgewandten Seite eine Reflektionsschicht (6) angeordnet ist, mit der zumindest ein Teil der durch die Halbleiterschicht (3) hindurchgehenden Sonnenstrahlung reflektierbar ist, dadurch gekennzeichnet, daß die Reflektionsschicht als Flüssigkristallschicht (6) ausgebildet ist, deren Transparenz in Abhängigkeit von der daran angelegten elektrischen Spannung steuerbar ist.

2. Scheibe nach Anspruch 1, dadurch gekennzeichnet, daß die Halbleiterschicht (3) auf der der Flüssigkristallschicht (6) zugewandten Seite einer Dünnglasscheibe (2) aufgebracht ist.

3. Scheibe nach Anspruch 1 oder 2, dadurch gekennzeichnet, daß die Halbleiterschicht durch amorphes Silizium gebildet wird.

4. Scheibe nach einem der vorstehenden Ansprüche, dadurch gekennzeichnet, daß auf der der Sonneneinstrahlung abgewandten Seite der Flüssigkristallschicht (6) eine Formglasschicht (11) angeordnet ist.

5. Scheibe nach Anspruch 4, dadurch gekennzeichnet, daß die Formglasschicht (11) eine vorgespannte Glasschicht ist.

6. Scheibe nach einem der vorstehenden Ansprüche, dadurch gekennzeichnet, daß zumindest auf einer Seite der Flüssigkristallschicht (6) eine elastomere Kunststoffschicht (4, 9; 12, 13) vorgesehen ist.

7. Scheibe nach Anspruch 6, dadurch gekennzeichnet, daß zumindest eine der beiden Elektrodenschichten (5, 10) der Flüssigkristallschicht (6) auf der dieser zugewandten Seite der Kunststoffschicht (4, 9) angeordnet ist.

8. Scheibe nach Anspruch 6 oder 7, dadurch gekennzeichnet, daß die Kunststoffschicht (4, 9) aus Polyvinylbutyral oder einem Ethylen-Vinylacetat-Copolymeren besteht.

9. Scheibe nach einem der vorstehenden Ansprüche, dadurch gekennzeichnet, daß eine der beiden Elektroden (5′) der Flüssigkristallschicht (6) auf der der Flüssigkristallschicht (6) zugewandten Seite der Halbleiterschicht (3) angeordnet ist.

10. Scheibe nach einem der vorstehenden Ansprüche, dadurch gekennzeichnet, daß zumindest eine der beiden Elektroden der Flüssigkristallschicht (6) aus Indium-Zinn-Oxid besteht.

11. Scheibe nach Anspruch 6, dadurch gekennzeichnet, daß die Kunststoffschicht (12, 13) aus elektrisch leitfähigem Material besteht und eine der beiden Elektroden der Flüssigkristallschicht (6) bildet.

12. Scheibe nach einem der vorstehenden Ansprüche, dadurch gekennzeichnet, daß die Flüssigkristallschicht (6) eine IR-Strahlung selektiv reflektierende Flüssigkristallschicht ist.

13. Scheibe nach einem der vorstehenden Ansprüche, dadurch gekennzeichnet, daß die an die Flüssigkristallschicht (6) angelegte Spannung eine Wechselspannung ist.

14. Scheibe nach Anspruch 13, dadurch gekennzeichnet, daß die Frequenz der Wechselspannung mindestens 10 Hz, vorzugsweise 100 Hz, beträgt.

15. Scheibe nach einem der vorstehenden Ansprüche, dadurch gekennzeichnet, daß sie Abschnitte mit unterschiedlicher Schichtdicke der Flüssigkristallschicht (6) aufweist.

16. Scheibe nach einem der vorstehenden Ansprüche für das Dach eines Kraftfahrzeuges, dadurch gekennzeichnet, daß die an die Flüssigkristallschicht (6) angelegte Spannung bei abgestelltem Fahrzeug abschaltbar ist.

17. Verwendung der Scheibe nach einem der vorstehenden Ansprüche zur Stromversorgung des Gebläses und/oder von Dauerstromverbrauchern eines Kraftfahrzeuges.

## Claims

1. A transparent sheet, especially for the roof of a motor vehicle, with a transparent barrier layer (3) on the side of which, facing the irradiation of the sun, a reflection layer (6) is arranged by which at least a portion of the radiation of the sun passing through the barrier layer (3) can be reflected, characterised in that the reflection layer is constructed as a liquid crystal layer (6) the transparency of which is controllable as a function of the electrical voltage which is applied thereto.

2. A sheet according to Claim 1, characterised in that the barrier layer (3) is applied on the side of a thin glass sheet (2) facing the liquid crystal layer (6).

3. A sheet according to Claim 1 or 2, characterised in that the barrier layer is formed of amorphous silicon.

4. A sheet according to one of the preceding Claims, characterised in that, on the side of the liquid crystal layer (6) facing away from the irradiation of the sun, a shaped glass layer (11) is arranged.

5. A sheet according to Claim 4, characterised in that the shaped glass layer (11) is a prestressed glass layer.

6. A sheet according to one of the preceding Claims, characterised in that, at least on one side of the liquid crystal layer (6), an elastomeric plastics layer (4, 9; 12, 13) is provided.

7. A sheet according to Claim 6, characterised in that at least one of the two electrode layers (5, 10) of the liquid crystal layer (6) is arranged on the side of the plastics layer (4, 9) facing this liquid crystal layer (6).

8. A sheet according to Claim 6 or 7, characterised in that the plastics layer (4, 9) is made of polyvinyl butyral or an ethylene vinyl acetate copolymer.

9. A sheet according to any one of the preceding Claims, characterised in that one of the two electrodes (5') of the liquid crystal layer (6) is arranged on the side of the barrier layer (3) facing the liquid crystal layer (6).

10. A sheet according to any one of the preceding Claims, characterised in that at least one of the two electrodes of the liquid crystal layer (6) is made of indium tin oxide.

11. A sheet according to Claim 6, characterised in that the plastics layer (12, 13) is made of electrically conductive material and forms one of the two electrodes of the liquid crystal layer (6).

12. A sheet according to any one of the preceding Claims, characterised in that the liquid crystal layer (6) is a liquid crystal layer which selectively reflects IR-radiation.

13. A sheet according to any one of the preceding Claims, characterised in that the voltage which is applied to the liquid crystal layer (6) is an alternating voltage.

14. A sheet according to Claim 13, characterised in that the frequency of the alternating voltage is at least 10 Hz, preferably 100 Hz.

15. A sheet according to any one of the preceding Claims, characterised in that it has sections of differing layer thickness of the liquid crystal layer (6).

16. A sheet according to any one of the preceding Claims for the roof of a motor vehicle, characterised in that the voltage which is applied to the liquid crystal layer (6) can be switched off when the vehicle is parked.

17. The use of the sheet according to any one of the preceding Claims to supply current to the fan and/or continuous current consuming devices of a motor vehicle.

## Revendications

1. Panneau transparent à la lumière, utilisable en particulier dans le toit d'un véhicule et comportant une couche semi-conductrice transparente (3) portant sur sa face tournée à l'opposé du soleil une couche réfléchissante (6) capable de renvoyer au moins une partie du rayonnement solaire qui a traversé la couche semi-conductrice (3), caractérisé en ce que la couche réfléchissante est une couche de cristaux liquides (6) dont la transparence peut être commandée au moyen de la tension électrique qui lui est appliquée.

**2.** Panneau selon la revendication 1, caractérisé en ce que la couche semi-conductrice (3) est déposée sur la face en regard de la couche de cristaux liquides (6), d'une glace mince en verre (2).

**3.** Panneau selon la revendication 1 ou 2, caractérisé en ce que la couche semi-conductrice est faite de silicium amorphe.

**4.** Panneau selon une des revendications précédentes, caractérisé en ce qu'une couche de forme en verre (11) est placée sur la face tournée à l'opposé du rayonnement solaire, de la couche de cristaux liquides (6).

**5.** Panneau selon la revendication 4, caractérisé en ce que la couche de forme en verre (11) est une couche présentant d'origine, des tensions internes.

**6.** Panneau selon une des revendications précédentes, caractérisé en ce qu'il est prévu au moins une couche d'élastomère (4, 9, 12, 13) sur une face de la couche de cristaux liquides (6).

**7.** Panneau selon la revendication 6, caractérisé en ce qu'au moins une des deux couches d'électrodes (5, 10) de la couche de cristaux liquides (6) est placée sur la face de cette couche en regard de la couche de matière plastique (4, 9).

**8.** Panneau selon la revendication 6 ou 7, caractérisé en ce que la couche de matière plastique (4, 9) est faite de polyvinylbutyrate ou d'un copolymère éthylène-acétate de vinyle.

**9.** Panneau selon une des revendications précédentes, caractérisé en ce qu'une des deux électrodes (5') de la couche de cristaux liquides (6) est placée sur la face de la couche semi-conductrice (3) en regard de la couche de cristaux liquides (6).

**10.** Panneau selon une des revendications précédentes, caractérisé en ce qu'au moins une des deux électrodes de la couche de cristaux liquides est en oxyde d'indium et d'étain.

**11.** Panneau selon la revendication 6, caractérisé en ce que la couche de matière plastique (12, 13) est faite d'un matériau conducteur de l'électricité et constitue une des deux électrodes de la couche de cristaux liquides (6).

**12.** Panneau selon une des revendications précédentes, caractérisé en ce que la couche de cristaux liquides (6) réfléchit sélectivement le rayonnement infrarouge.

**13.** Panneau selon une des revendications précédentes, caractérisé en ce que la tension appliquée à la couche de cristaux liquides (6) à une tension alternative.

**14.** Panneau selon la revendication 13, caractérisé en ce que la fréquence de la tension alternative est de 10 Hz au moins, 100 Hz de préférence.

**15.** Panneau selon une des revendications précédentes, caractérisé en ce que la couche de cristaux liquides (6) comporte des parties de différentes épaisseurs.

**16.** Panneau selon une des revendications précédentes, destinée à un toit de véhicule, caractérisé en ce que la tension appliquée à la couche de cristaux liquides (6) peut être coupée lorsque le véhicule est en stationnement.

**17.** Panneau selon une des revendications précédentes, caractérisé en ce qu'elle est utilisée pour alimenter le ventilateur et/ou tout appareil à consommation continu d'un véhicule.

FIG. 1

FIG. 2

FIG. 3